**Europäisches Patentamt**

**European Patent Office**

**Office européen des brevets**

(19)

(11) Veröffentlichungsnummer : **0 394 670 B1**

(12)

# EUROPÄISCHE PATENTSCHRIFT

(45) Veröffentlichungstag der Patentschrift :
**03.11.93 Patentblatt 93/44**

(51) Int. Cl.⁵ : **C01F 7/00,** C08K 3/26

(21) Anmeldenummer : **90105368.6**

(22) Anmeldetag : **21.03.90**

(54) **Verfahren zur Herstellung von Dawsonit.**

(30) Priorität : **21.04.89 DE 3913243**

(43) Veröffentlichungstag der Anmeldung :
**31.10.90 Patentblatt 90/44**

(45) Bekanntmachung des Hinweises auf die
Patenterteilung :
**03.11.93 Patentblatt 93/44**

(84) Benannte Vertragsstaaten :
**CH DE FR GB IT LI**

(56) Entgegenhaltungen :
**GB-A- 786 748**
**US-A- 3 501 264**
**US-A- 4 221 771**

(56) Entgegenhaltungen :
**CHEMICAL ABSTRACTS, vol. 107, no. 18, November 1987 Columbus, Ohio, USA Y. Yazawa et al.: "Manufacture of crystalline ammonium dawsonite." Seite 201; ref. no. 157634 K & JP-A-62059526 (DAIMEI CHEM IND)**
**CHEMICAL ABSTRACTS, vol. 92, no. 18, 18 Mai 1980 Columbus, Ohio, USA C. Horie et al.: "Fibrous dawsonite." Seite 157; ref. no. 149392 & JP-A-80010464 (SHOWA TANSAN)**

(73) Patentinhaber : **UNIVERSITÄT KARLSRUHE, (TECHNISCHE HOCHSCHULE)**
**Kaiserstrasse 12**
**D-76128 Karlsruhe 1 (DE)**

(72) Erfinder : **Herold, Gunther, Dr.**
**Kaiserstrasse 12**
**D-7500 Karlsruhe (DE)**

(74) Vertreter : **von Füner, Alexander, Dr. et al**
**Patentanwälte v. Füner, Ebbinghaus, Finck**
**Mariahilfplatz 2 & 3**
**D-81541 München (DE)**

**Beschreibung**

Die Erfindung betrifft ein Verfahren zur Herstellung eines Dawsonits mit kurzprismatischem, isometrischem Kristallhabitus.

Dawsonit ist ein natürlich vorkommendes Mineral der Formel $NaAl(OH)_2CO_3$, das orthorhombisch mit nadeligem Habitus kristallisiert.

Aufgrund seiner chemischen und thermischen Eigenschaften ist Dawsonit als Flammhemmstoff, z.B. in Kunststoffen, einsetzbar. Es hat daher nicht an Verfahren gefehlt, Dawsonit synthetisch herzustellen, z.B. US-PS 4 221 771, DE-PS 32 12 799 oder WO 81/02728.

Von grossem Nachteil ist aber, dass auch der nach diesen bekannten Verfahren synthetisierte Dawsonit einen nadeligen Habitus aufweist. Daher ist bei den produktionstechnisch anfallenden Stäuben der TRK-Wert für faserige Stäube anzuwenden. Als Fasern werden Partikel mit einer Länge von grösser 5 μm und einem Durchmesser von kleiner 3 μm, bei einem Verhältnis von Länge zu Durchmesser von mindestens 3 : 1 anzusehen (Arbeitsschutz , Technische Regeln für Gefahrstoffe, Ber. des BMA vom 10.9.1987, IIIb 4-35125-5). Aus toxikologischen und arbeitsmedizinischen Gründen, in Anlehnung an die Erfahrungen mit Asbest, sind daher Verfahren mit dem Anfall von faserigen Stäuben äusserst ungeeignet und daher zu vermeiden.

Aufgabe der Erfindung war es daher, eine Herstellungsmethode zu entwickeln, die zu einem arbeitsmedizinisch unbedenklichen Dawsonit mit kurzprismatischem Habitus führt. Im weiteren war zu fordern, dass die Synthese mit einer kurzen Reaktionszeit, einer hohen Ausbeute sowie ohne Anfall unerwünschter oder bedenklicher Nebenprodukte verläuft. Eine hohe thermische Stabilität muss ebenfalls gewährleistet sein.

Diese Aufgabe konnte gelöst werden mit einem Verfahren nach einem der nachfolgenden Patentansprüche.

Basisreaktionen des erfindungsgemässen Verfahrens sind dabei die Umsetzung von Aluminiumhydroxid mit Natriumcarbonat und/oder Natriumbicarbonat gemäss

$$Al(OH)_3 + NaHCO_3 / Na_2CO_3 \rightarrow Dawsonit$$

oder die Reaktion einer Na-aluminatlösung mit Harnstoff und/oder Natriumcarbonat und/oder Natriumbicarbonat als Carbonatlieferant.

Durch die Zugabe von Hydroxycarbonsäure und/oder deren Salze zur jeweiligen Umsetzung wurde überraschenderweise eine Aenderung des Kristallhabitus erzielt.

Unter Hydroxycarbonsäuren werden $C_1$-$C_4$-Alkanmono-, Alkandi- oder Alkantricarbonsäuren verstanden, die mit 1 bis 2 Hydroxygruppen substituiert sind. Vorteilhafte Vertreter aus dieser Gruppe sind die Zitronensäure, die Aepfelsäure oder die Weinsäure bzw. deren Salze. Besonders geeignet ist die Zitronensäure. Es ist durchaus möglich, Gemische der genannten Hydroxycarbonsäuren einzusetzen.

Die Zugabemenge der entsprechenden Hydroxycarbonsäuren hat deutlichen Einfluss auf die Kristallform des entstehenden Dawsonits. Es hat sich als zweckmässig erwiesen, pro Gewichtseinheit Al der eingesetzten Al-Verbindung 5 bis 200% der betreffenden Hydroxycarbonsäure zuzusetzen. Bevorzugt ist eine Zugabe im Bereich von 5 bis 100% pro Gewichtseinheit Al, und optimale Ergebnisse werden in einem Zugabebereich von 10 bis 20% pro Gewichtseinheit Al erzielt.

Ein weiterer Vorzug der Erfindung ist, dass sich die eingesetzte Hydroxycarbonsäure nicht verbraucht und daher nach beendeter Umsetzung und Abtrennung des Dawsonits in gelöster Form weiteren Umsetzungen zur Verfügung gestellt werden kann.

Im weiteren hat es sich als zweckmässig erwiesen, die Umsetzungen in einem Temperaturbereich von 150 bis 220°C über einen Zeitraum von mindestens 3 Stunden durchzuführen. Vorzugsweise wird bei 170 bis 190°C über einen Zeitraum von 3 bis 5 Stunden gearbeitet.

Bildet die Umsetzung einer Na-aluminatlösung mit Natriumcarbonat und/oder mit Natriumbicarbonat die Basisreaktion, ist aufgrund der hohen Alkalinität der Ausgangslösung zwecks Erzielung einer hohen Ausbeute die Reaktion zu puffern.

Hierfür eignen sich die Kombinationen Harnstoff/Natriumbicarbonat oder Natriumcarbonat/Natriumbicarbonat oder Natriumcarbonat/Ammoniumchlorid.

Geeignet ist auch eine Absenkung des pH-Wertes der Aluminatlauge vor Versuchsbeginn auf pH 10 bis 12 durch entsprechende Säurezugabe (Salzsäure), wobei das Carbonatangebot durch Natriumcarbonat und/oder Natriumbicarbonat erfolgt.

Zweckmässig wird bei diesem Reaktionssystem eine Na-aluminatlösung eingesetzt, die aus einem Aluminiumhydroxid, vorzugsweise Gibbsit, und einer wässrigen Natronlauge, z.B. 1,8 bis 3,6 m NaOH, gebildet wird. Hierzu werden 25 bis 50 g $Al(OH)_3$ pro Liter Natronlauge obiger Molarität gelöst. Je höher die Molarität der Natronlauge, umso grössere Mengen an Aluminiumhydroxid können in Lösung gebracht werden.

Die Carbonatlieferanten Harnstoff, Natriumcarbonat oder Natriumbicarbonat können einzeln oder in Mischung untereinander eingesetzt werden, wobei dann in der Lösung eine Carbonatkonzentration vorhanden sein muss, die einer mindestens 1,5 m, vorzugsweise 2 bis 5 m, Natriumcarbonatlösung entspricht. Vorzugsweise wird vor der Reaktion mit geeigneter Säurezugabe der pH-Wert auf 10-12 abgesenkt und als Carbonatlieferant Natriumcarbonat und/oder Natriumbicarbonat eingesetzt, bzw. ohne Absenkung des pH-Wertes eine Kombination Natriumbicarbonat/Harnstoff gewählt, die als Puffer und Carbonatlieferant fungiert.

Bildet die Umsetzung eines Aluminiumhydroxids mit Natriumcarbonat und/oder Natriumbicarbonat die Basisreaktion, haben sich folgende Eduktbedingungen als vorteilhaft herausgestellt. Als Aluminiumhydroxid wird vorzugsweise Gibbsit verwendet, das mit mindestens der theoretischen Menge einer mindestens 1,5 molaren, vorzugsweise 2 bis 5 molaren wässrigen Lösung von Natriumcarbonat und/oder einer mindestens 1,5 molaren, vorzugsweise 2 bis 5 molaren wässrigen Lösung von Natriumbicarbonat bei den genannten Bedingungen umgesetzt wird.

Dabei entspricht die theoretische Menge bei Einsatz einer 1,5 molaren Natriumcarbonatlösung einem Gewichtsverhältnis Natriumcarbonat zu Aluminiumhydroxid von 6,6 zu 1.

Besonders bevorzugt für diesen Reaktionstypus ist die Umsetzung von Gibbsit mit einer 2 bis 5 molaren wässrigen Lösung von Natriumcarbonat und einer 2 bis 5 molaren wässrigen Lösung von Natriumbicarbonat. Es kann sich als vorteilhaft erweisen, die Umsetzung durch Zugabe von insbesondere Harnstoffe zu puffern.

Nach dem erfindungsgemässen Verfahren lässt sich Dawsonit in nahezu quantitativen Ausbeuten mit einem kurzprismatischen, isometrischen Habitus (Länge der Kristalle im Bereich von 0,1 bis 2 $\mu$m) herstellen. Es ist selbstverständlich möglich, grössere bzw. auch Kristalle kleiner als 0,1 $\mu$m herzustellen. Da mit abnehmender Kristallinität die thermischen Eigenschaften sich deutlich verschlechtern, sind solche Produkte für die Einarbeitung in Kunststoffe nicht interessant.

Für eine grosstechnische Produktion nach dem erfindungsgemässen Verfahren bestehen keine arbeitsmedizinischen und toxikologischen Bedenken mehr.

In den Figuren bedeutet:

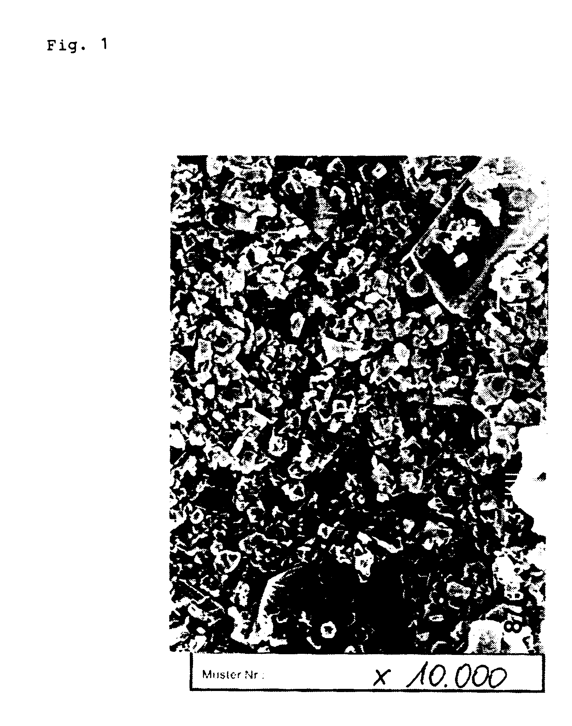

Fig. 1: ein kurzprismatischer isometrischer Dawsonit, hergegestellt aus Gibbsit und einer wässrigen 2 m $NaHCO_3$ und einer wässrigen 2 m $Na_2CO_3$ mit Zusatz von 100 mg Zitronensäure bei 180°C über 4 Stunden (Beispiel 1.3)

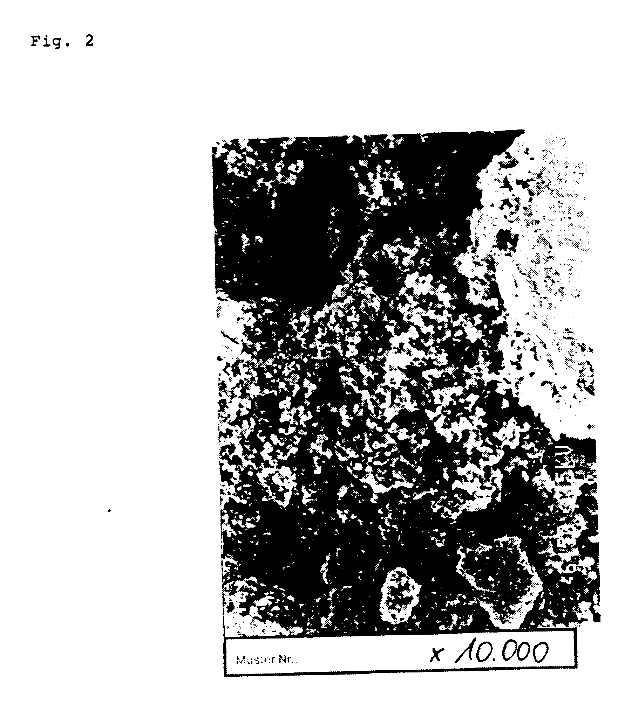

Fig. 2: ein kurzprismatischer isometrischer Dawsonit, hergestellt aus einer Natriumaluminatlösung (25 g Al(OH)$_3$ in 1,8 m NaOH) und 4 g $NaHCO_3$ und 4 g $Na_2CO_3$ unter Zusatz von 50 mg Zitronensäure bei 180°C über 4 Stunden (Beispiel 2.8).

### Beispiel

1) Basisreaktion: Al(OH)$_3$ + $NaHCO_3$ / $Na_2CO_3$

In einem Autoklaven wurden 1,45 g Gibbsit mit 30 ml $NaHCO_3$-Lösung (2 m in $H_2O$) mit 30 ml $Na_2CO_3$-Lösung (2 m in $H_2O$) bei 180°C und der jeweiligen Hydroxycarbonsäure (s. Tabelle) über 4 h gerührt.

| Beispiel | Zusatz | pH | Ausbeute | Bemerkungen |
|---|---|---|---|---|
| 1 | 1000 mg ZS | 9,6 | 65% | verunreinigt mit Böhmit |
| 2 | 500 mg ZS | 9,8 | 87% | |
| 3 | 100 mg ZS | 9,8 | 95% | |
| 4 | 50 mg ZS | 9,9 | 98% | |
| 5 | 25 mg ZS | 9,7 | 100% | |
| 6 | 10 mg ZS | 9,7 | 100% | stengeliger Habitus |
| 7 | 1000 mg WS | 9,6 | kl.50% | hoher Böhmitanteil |
| 8 | 300 mg WS | 9,8 | 93% | |
| 9 | 100 mg WS | 9,8 | 96% | |
| 10 | 50 mg WS | 9,7 | 99% | |
| 11 | 25 mg WS | 9,9 | 100% | |
| 12 | 100 mg Na-tartrat | 9,9 | 96% | |
| 13 | 50 mg Na-citrat | 9,7 | 95% | |
| 14 | 2000 mg AS | 9,5 | 80% | hoher Gibbsitanteil |
| 15 | 70 mg ZS | 9,8 | 97% | |
| 16 | 70 mg ZS | 9,8 | 95% | 1,75 g $Al(OH)_3$, 2,4 m $Na_2CO_3/NaHCO_3$ |
| 17 | 70 mg ZS | 9,8 | 96% | 2,00 g $Al(OH)_3$, 2,8 m $Na_2CO_3/NaHCO_3$ |
| 18 | 70 mg ZS | 9,9 | 95% | 2,25 g $Al(OH)_3$, 3,1 m $Na_2CO_3/NaHCO_3$ |
| 19 | 70 mg ZS | – | 96% | |
| 20 | 70 mg ZS | – | 98% | |
| 21 | – | 9,7 | 96% | (ohne ZS-Zugabe wurden die Filtrate der Beispiele 19 + 20 verwendet) |

ZS = Zitronensäure

WS = Weinsäure

AS = Aepfelsäure

2) <u>Basisreaktion</u>: Na-aluminatlösung + $NaHCO_3/NaCO_3$/Harnstoff

In einem Autoklaven wurden 60 ml Na-aluminatlösung (25 g Gibbsit in 1 l 1,8 m NaOH) bei 180°C mit Zusätzen über 3 bis 4 h gerührt.

| Beispiel | Zusätze | | | pH | Ausbeute |
|---|---|---|---|---|---|
| 1 | 100 mg ZS + 8 g $NaHCO_3$ | + 2 g Harnstoff | | 11,3 | 97% |
| 2 | 200 mg ZS + 10 g " | + 1 g " | | 11,0 | 95% |
| 3 | 200 mg ZS + 10 g " | + 2 g $NH_4Cl$ | | 11,6 | 92% |
| 4 | 50 mg ZS + 8 g " | + 2 g Harnstoff | | 11,2 | 98% |
| 5 | 30 mg ZS + 10 g " | + 1 g " | | 11,3 | 99% |
| 6 | 25 mg ZS + 4 g " | + 4 g " | | 11,6 | 98% |
| 7 * | 50 mg ZS + 8 g " | | | 8,5 | 98% |
| 8 * | 50 mg ZS + 4 g " | + 4 g $Na_2CO_3$ | | 8,8 | 96% |

\* vor Versuchsbeginn wurde der pH-Wert durch
Säurezugabe (Salzsäure) auf 10 abgesenkt

In einem Autoklaven wurden 40 ml Na-aluminatlösung (50 g Gibbsit in 1 3,6 m NaOH) bei 180°C mit Zusätzen über 3 bis 4 h gerührt. Vor Versuchsbeginn wurde der pH-Wert durch Säurezugabe (Salzsäure) auf 11 abgesenkt.

| | | | Ausbeute |
|---|---|---|---|
| 9 | 50 mg ZS + 8 g $NaHCO_3$ | – | 97% |
| 10 | 25 mg ZS + 8 g " | – | 96% |
| 11 | 10 mg ZS + 8 g " | – | 98% |

**Patentansprüche**

1. Verfahren zur Herstellung von Dawsonit mit kurzprismatischem, isometrischem Kristallhabitus durch Umsetzung von Aluminiumhydroxid mit Natriumcarbonat und/oder Natriumbicarbonat oder durch Umsetzung einer wässrigen Natriumaluminatlösung mit Natriumcarbonat und/oder Natriumbicarbonat und/oder Harnstoff, dadurch gekennzeichnet, dass die Reaktion in Gegenwart von Hydroxycarbonsäure und/oder deren Salze erfolgt.

2. Verfahren nach Patentanspruch 1, dadurch gekennzeichnet, dass als Hydroxycarbonsäure Zitronensäure, Aepfelsäure oder Weinsäure bzw. deren Salze oder Mischungen der genannten Hydroxycarbonsäuren bzw. deren Salze eingesetzt werden.

3. Verfahren nach Patentanspruch 2, dadurch gekennzeichnet, dass Zitronensäure eingesetzt wird.

4. Verfahren nach Patentansprüchen 1 bis 3, dadurch gekennzeichnet, dass die Hydroxycarbonsäure in einer Konzentration von 5 bis 200% pro Gewichtseinheit Al in der eingesetzten Al-Verbindung zugesetzt wird.

5. Verfahren nach Patentansprüchen 1 bis 4, dadurch gekennzeichnet, dass die Hydroxycarbonsäure in einer Konzentration von 5 bis 100% pro Gewichtseinheit Al in der eingesetzten Al-Verbindung eingesetzt wird.

6. Verfahren nach Patentansprüchen 1 bis 5, dadurch gekennzeichnet, dass die Reaktion bei Temperaturen

5

von 150 bis 220°C durchgeführt wird.

7. Verfahren nach Patentansprüchen 1 bis 6, dadurch gekennzeichnet, dass die Reaktion bei Temperaturen von 170 bis 190°C durchgeführt wird.

8. Verfahren nach Patentansprüchen 1 bis 7, dadurch gekennzeichnet, dass die Reaktion in einem pH-Bereich von 8 bis 13 erfolgt.

9. Verfahren nach Anspruch 1, dadurch gekennzeichnet, dass das Aluminiumhydroxid mit mindestens der theoretischen Menge einer mindestens 1,5 molaren wässrigen Lösung von Natriumcarbonat und/oder Natriumbicarbonat umgesetzt wird.

10. Verfahren nach Patentansprüchen 1 und 9, dadurch gekennzeichnet, dass das Aluminiumhydroxid mit mindestens der theoretischen Menge einer 2 bis 5 molaren wässrigen Lösung von Natriumcarbonat und/oder Natriumbicarbonat umgesetzt wird.

11. Verfahren nach Patentanspruch 1, dadurch gekennzeichnet, dass die Natriumaluminatlösung aus einem Aluminiumhydroxid mit einer wässrigen Natronlauge gebildet wird.

12. Verfahren nach Patentansprüchen 1 bis 11, dadurch gekennzeichnet, dass die resultierenden kurzprismatischen, isometrischen Dawsonitkristalle eine Länge in kristallographischer c-Richtung im Bereich von 0,1 bis 2 $\mu$m aufweisen.

13. Dawsonit mit einem kurzprismatischen, isometrischen Habitus, erhältlich nach einem Verfahren der Ansprüche 1 bis 12.

14. Verwendung eines kurzprismatischen isometrischen Dawsonits, hergestellt nach einem Verfahren nach Patentansprüchen 1 bis 12, als flammhemmender Zusatz in Kunststoffen.

## Claims

1. A process for the preparation of dawsonite with a short-prismatic isometric crystal habit by the reaction of aluminium hydroxide with sodium carbonate and/or sodium bicarbonate or by the reaction of an aqueous sodium aluminate solution with sodium carbonate and/or sodium bicarbonate and/or urea, characterized in that the reaction is carried out in the presence of a hydroxycarboxylic acid and/or salts thereof.

2. A process according to Claim 1, characterized in that the hydroxycarboxylic acid used is citric acid, malic acid or tartaric acid and/or salts thereof, or mixtures of said hydroxycarboxylic acids and/or salts thereof.

3. A process according to Claim 2, characterized in that citric acid is used.

4. A process according to Claims 1 to 3, characterized in that the hydroxycarboxylic acid is added in a concentration of 5 to 200% per unit weight of Al in the Al compound used.

5. A process according to Claims 1 to 4, characterized in that the hydroxycarboxylic acid is used in a concentration of 5 to 100% per unit weight of Al in the Al compound used.

6. A process according to Claims 1 to 5, characterized in that the reaction is carried out at temperatures of 150 to 220°C.

7. A process according to Claims 1 to 6, characterized in that the reaction is carried out at temperatures of 170 to 190°C.

8. A process according to Claims 1 to 7, characterized in that the reaction is carried out in the pH range 8 to 13.

9. A process according to Claim 1, characterized in that the aluminium hydroxide is reacted with at least the theoretical amount of an at least 1.5 molar aqueous solution of sodium carbonate and/or sodium bicarbonate.

6

**10.** A process according to Claims 1 and 9, characterized in that the aluminium hydroxide is reacted with at least the theoretical amount of a 2 to 5 molar aqueous solution of sodium carbonate and/or sodium bicarbonate.

**11.** A process according to Claim 1, characterized in that the sodium aluminate solution is formed from an aluminium hydroxide with an aqueous sodium hydroxide solution.

**12.** A process according to Claims 1 to 11, characterized in that the resulting short-prismatic isometric dawsonite crystals have a length in the range 0.1 to 2 µm in the crystallographic c-direction.

**13.** Dawsonite with a short-prismatic isometric habit, obtainable by a process according to Claims 1 to 12.

**14.** Use of a short-prismatic isometric dawsonite, prepared by a process according to Claims 1 to 12, as a flame-retardant additive in plastics.


**Revendications**

**1.** Procédé de préparation de dawsonite ayant un faciès cristallin prismatique court isométrique par réaction d'hydroxyde d'aluminium avec du carbonate de sodium et/ou du bicarbonate de sodium ou par réaction d'une solution aqueuse d'aluminate de sodium avec du carbonate de sodium et/ou du bicarbonate de sodium et/ou de l'urée, caractérisé en ce que la reaction s'effectue en présence d'un acidc hydroxycarboxylique et/ou de ses sels.

**2.** Procédé selon la revendication 1, caractérisé en ce que l'on utilise comme acide hydroxycarboxylique de l'acide citrique, de l'acide malique ou de l'acide tartrique ou leurs sels ou des mélanges des acides hydroxycarboxyliques indiqués ou de leurs sels.

**3.** Procédé selon la revendication 2, caractérisé en ce que l'on utilise de l'acide citrique.

**4.** Procédé selon les revendications 1 à 3, caractérisé en ce que l'acide hydroxycarboxylique est ajouté à une concentration de 5 à 200 % par unité de masse d'Al dans le composé d'Al utilisé.

**5.** Procédé selon les revendications 1 à 4, caractérisé en ce que l'acide hydroxycarboxylique est ajouté à une concentration de 5 à 100 % par unité de masse d'Al dans le composé d'Al utilisé.

**6.** Procédé selon les revendications 1 à 5, caractérisé en ce que la réaction est effectuée à des températures de 150 à 220°C.

**7.** Procédé selon les revendications 1 à 6, caractérisé en ce que la réaction est effectuée à des températures de 170 à 190°C.

**8.** Procédé selon les revendications 1 à 7, caractérisé en ce que la réaction est effectuée à un pH compris entre 8 et 13.

**9.** Procédé selon la revendication 1, caractérisé en ce que l'on fait réagir l'hydroxyde d'aluminium avec au moins la quantité théorique d'une solution aqueuse au moins 1,5 M de carbonate de sodium et/ou de bicarbonate de sodium.

**10.** Procédé selon les revendications 1 et 9, caractérisé en ce que l'on fait réagir l'hydroxyde d'aluminium avec au moins la quantité théorique d'une solution aqueuse 2 à 5 M de carbonate de sodium et/ou de bicarbonate de sodium.

**11.** Procédé selon la revendication 1, caractérisé en ce que la solution d'aluminate de sodium est formée à partir d'un hydroxyde d'aluminium et d'une solution aqueuse de soude.

**12.** Procédé selon les revendications 1 à 11, caractérisé en ce que les cristaux de dawsonite prismatiques courts isométriques obtenus présentent une longueur dans la direction cristallographique c comprise entre 0,1 et 2 µm.

13. Dawsonite ayant un faciès cristallin prismatique court isométrique, pouvant être obtenue selon un procédé des revendications 1 à 12.

14. Utilisation d'une dawsonite prismatique courte isométrique, produite selon un procédé des revendications 1 à 12, en tant qu'additif ignifuge dans des matières synthétiques.

Fig. 1

Muster Nr :  X 10.000

Fig. 2